Europäisches Patentamt

European Patent Office

Office européen des brevets

(19)

(11) EP 0 996 250 A2

(12) EUROPEAN PATENT APPLICATION

(43) Date of publication:
26.04.2000 Bulletin 2000/17

(51) Int Cl.⁷: H04L 9/06

(21) Application number: 99308041.5

(22) Date of filing: 12.10.1999

(84) Designated Contracting States:
AT BE CH CY DE DK ES FI FR GB GR IE IT LI LU
MC NL PT SE
Designated Extension States:
AL LT LV MK RO SI

(30) Priority: 20.10.1998 US 175179

(71) Applicant: LUCENT TECHNOLOGIES INC.
Murray Hill, New Jersey 07974-0636 (US)

(72) Inventors:
• Patel, Sarvar
Montville, New Jersey 07045 (US)
• Ramzan, Zulfikar Amin
Boston, Massachusetts 02115 (US)
• Sundaram, Ganapathy Subramanian
Scotch Plains, New Jersey 07076 (US)

(74) Representative:
Watts, Christopher Malcolm Kelway, Dr. et al
Lucent Technologies (UK) Ltd,
5 Mornington Road
Woodford Green Essex, IG8 0TU (GB)

(54) Efficient block cipher method

(57) The present invention provides an encryption or cipher method that uses the same pseudorandom function twice rather than different pseudorandom functions. Additionally, the present invention uses hashing functions that are highly efficient. The hashing functions of the present invention are square hashing functions that square a sum of a key and a data string rather than using a multiplication. As a result the hashing operation only requires $\frac{w^2 + w}{2}$ operations rather than the $w^2$ operations required by the inefficient hashing functions used in the prior art.. Additionally, the present invention replaces the exclusive ORed operations of the prior art with modular "n" summing operations.

FIG. 3

EP 0 996 250 A2

## Description

## Background of the Invention

## Field of the Invention

The present invention relates to data manipulation; more particularly, data ciphering or encryption.

## Description of the Related Art

Block data encryption or ciphering involves inputting a block or string of data and producing a corresponding encrypted or ciphered block or string of data. Block encryption on ciphering is used to provide data security when using easily interceptable communication such as cellular communications.

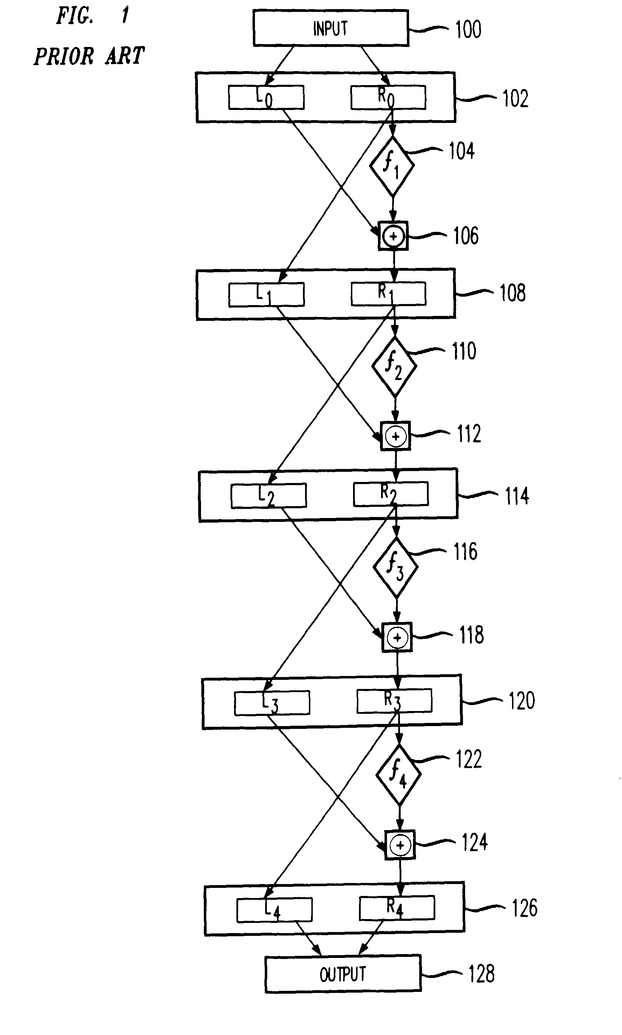

In the past the Luby-Rackoff method was used to encrypt blocks of data. This method is illustrated in FIG. 1. In step 100 a block of data to be encrypted containing "2n" bits is inputted. In step 102 the "2n" block or string of input data is split into 2 blocks of "n" bits each labeled $L_0$ and $R_0$. In step 104 the $R_0$ block of data is used as an operand and pseudorandom function $f_1$. Pseudorandom function $f_1$ may be a function such as the RIPE-MD pseudorandom function, the GGM pseudorandom function, or the MD5 pseudorandom function. The output from step 104 is exclusive ORed, with the $L_0$ string of bits from step 102. The output of step 106 is passed to step 108 where the output of step 106 is used as $R_1$ having "n" bits and $L_1$ is set equal to $R_0$ which also has "n" bits. In step 110, $R_1$ is used as an operand of a second pseudorandom function $f_2$. Pseudorandom function $f_2$ is different than pseudorandom function $f_1$. The result produced by step 110 is exclusive ORed with $L_1$ in step 112. In step 114 the output of step 112 is stored as the "n" bit string $R_2$ and the string $L_2$ is set equal to the "n" bit string $R_1$. In step 116 string $R_2$ is used as an operand of pseudorandom function $f_3$. Pseudorandom function $f_3$ is different than pseudorandom functions $f_1$ and $f_2$. In step 118 the output of pseudorandom function $f_3$ is exclusive ORed with the value $L_2$. In step 120 the output of step 118 is stored as "n" bit string $R_3$ and the string $L_3$ is set equal to the "n" bit string $R_2$. In step 122 pseudorandom function $f_4$ uses string $R_3$ as an operand to produce an output used by step 124. Pseudorandom function $f_4$ is different than pseudorandom functions $f_1$ through $f_3$. In step 124 the output of pseudorandom function $f_4$ is exclusive ORed with the string $L_3$. In step 126 the output from step 124 is stored as "n" bit string $R_4$ and the string $L_4$ is set equal to the "n" bit string $R_3$. In step 128 the strings $L_4$ and $R_4$ are outputted as the "2n" output of the encryption method illustrated in the figure.

The method illustrated in FIG. 1 uses four different pseudorandom functions and as a result is a computational intensive method.

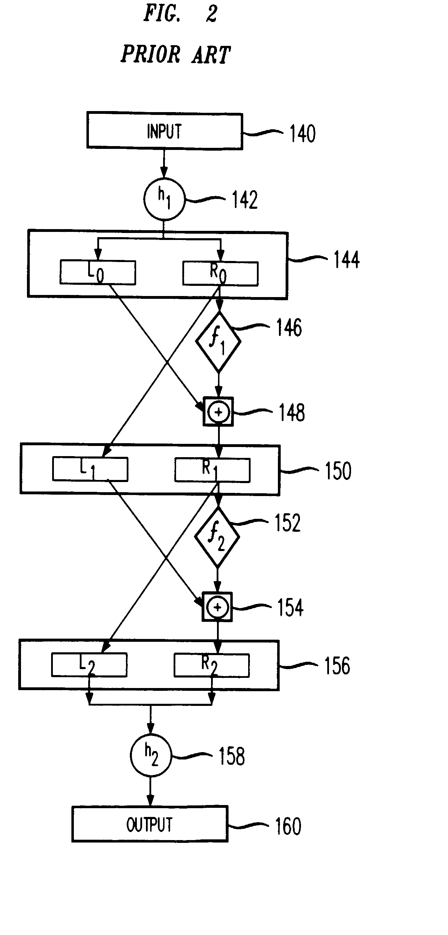

FIG. 2 illustrates a second prior art method for encrypting blocks or strings of data. This method is known as the Naor-Reingold encryption method. In step 140 a "2n" block of data to be encrypted is inputted. In step 142 the "2n" bits of data is used an operand of a hash function such as the hash function of Equation (1) to produce "2n" bit out.

$$h(m) = (ma + b)\mathrm{mod}_n \qquad (1)$$

In step 144 the "2n" bits produced by step 142 are broken into blocks $L_0$ and $R_0$, each consisting of "n" bits. In step 146 pseudorandom function $f_1$ uses data block $R_0$ as an operand to produce an output used by step 148. Pseudorandom function $f_1$ may be, for example, one of the pseudorandom functions discussed with regard to FIG. 1. In step 148 the output from step 146 is exclusive ORed with data block or string $L_0$. The output of step 148 is stored as "n" bit string $R_1$ in step 150 and "n" string $L_1$ is set equal to "n" bit string $R_0$. In step 152 pseudorandom function $f_2$ uses data string $R_1$ as an operand to produce an output for step 154. Pseudorandom function $f_2$ is a different pseudorandom function than $f_1$. In step 154 the output of step 152 is exclusive ORed modular "n", with data string $L_1$. In step 156 the output of step 154 is stored as "n" bit string $R_2$ and string $L_2$ is set equal to "n" bit string $R_1$. In step 158 a second hash function uses the "2n" both from "n" bit string $L_2$ and "n" bit string $R_2$ as an operand to produce a "2n" bits output which is outputted in step 160.

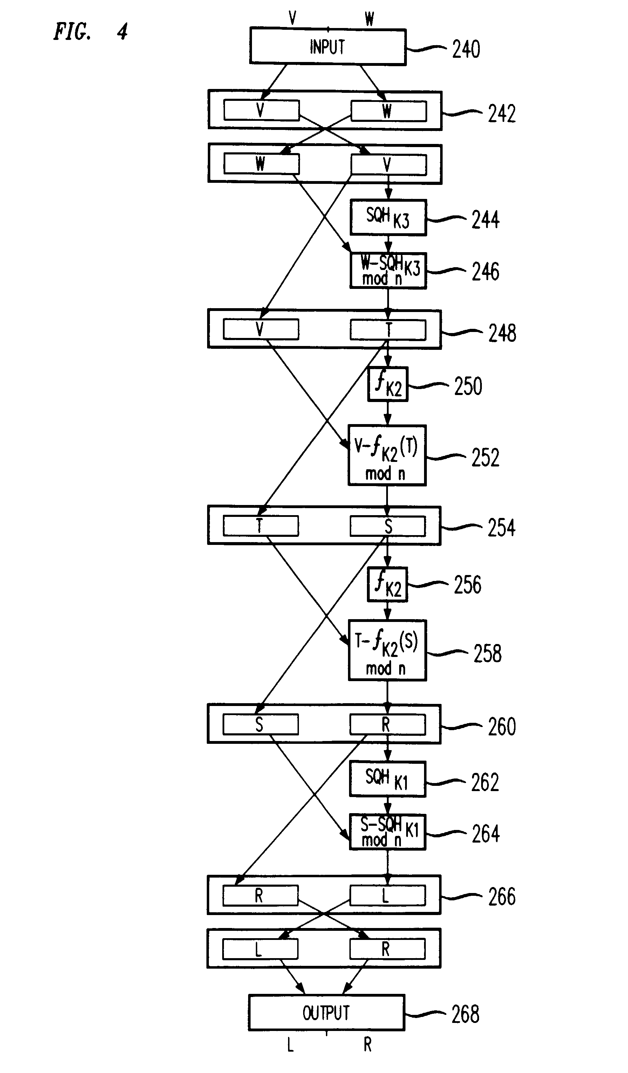

The prior art encryption method illustrated by FIG. 4 is also computationally intensive. It uses two different pseudorandom functions and two inefficient hash functions. A hash function, such as the has function of Equation (1), involves a multiplication of a key ("A") times the data string. Such a multiplication is computationally intensive and involves $w^2$ operations where "W" is the number of words in the data string. If, for example, the data block is 160 bits long, and the processor executing the method uses 32 bit words, there are 5 words composing the string and as a result $5^5$ or 25 operations are required to perform the multiplication.

## Summary of the Invention

The present invention solves the aforementioned inefficiencies by providing an encryption or cipher method that uses the same pseudorandom function twice rather than different pseudorandom functions. Additionally, the present invention uses hashing functions that are highly efficient. The hashing functions of the present invention are square hashing functions that square a sum of a key and a data string rather than using a multiplication. As a result the hashing operation only requires $\frac{w^2 + w}{2}$ operations rather than the $w^2$ operations required by the inefficient hashing functions used in the prior art. Additionally, the present invention replaces the exclusive ORed operations of the prior art with modular "n" summing operations.

## Brief Description of the Drawings

FIG. 1 illustrates the Luby-Rackoff prior art encryption method;

FIG. 2 illustrates the Naor-Reingold prior art encryption method;

FIG. 3 illustrates an efficient encryption method using square hashing functions;

FIG. 4 illustrates an efficient decryption method using square hashing functions;

FIG. 5 illustrates an overview of the method used to develop keys $K_1$ through $K_4$;

FIG. 6 illustrates how the operands for the SHA function are selected to produce $S_1$;

FIG. 7 illustrates how the operands for the SHA function are selected to produce $S_2$ through $S_{11}$; and

FIG. 8 illustrates how the least significant bits of strings $X_1$ through $X_{11}$ are used to provide the 832 bits used as keys $K_1$ through $K_4$.

## Detailed Description of the Invention

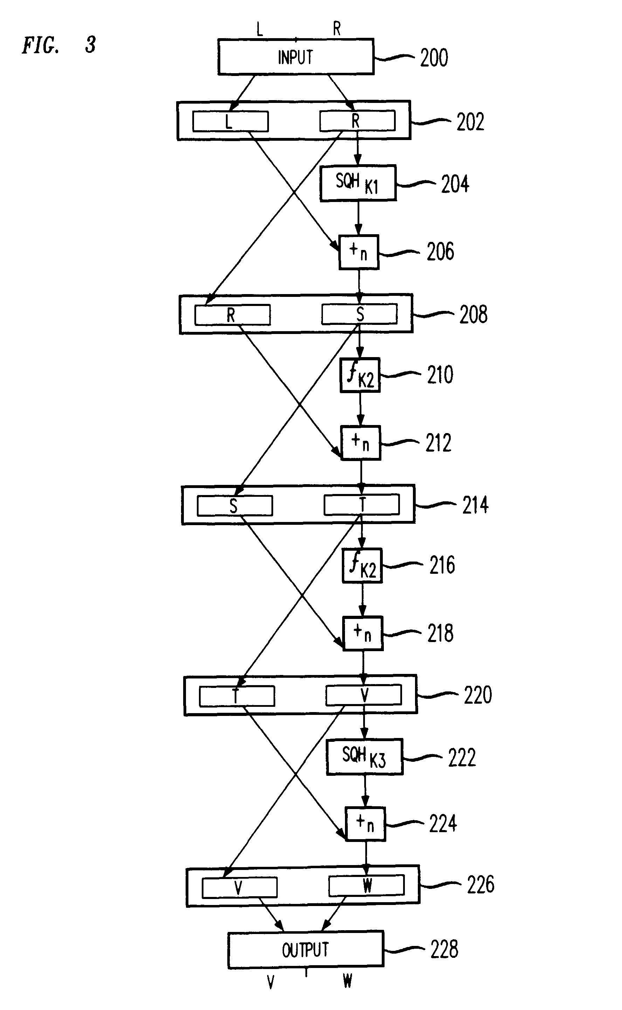

FIG. 3 illustrates an efficient encryption method using square hashing functions and one type of pseudorandom function. In step 200 a block or string of data is inputted for encryption. In step 202, the "2n" bit string is broken into strings "L" and "R", each consisting of "n" bits. In step 204, a square hashing function, such as the square hashing function of Equation (2) is used.

$$h(m) = (m+a)^2 \bmod{}_n \qquad (2)$$

The hashing function uses key $K_1$ and data block "R" as an operand to produce an "n" bit output. The "n" bit output from step 204 is summed, modular "n", with the "L" block of data in step 206. In step 208, the output from step 206 is stored as "n" bit string "S" and string "R" is once again stored as a "n" bit string block "R". In step 210, the "n" bit block "S" is used as an operand by pseudorandom function "f" with key $K_2$ to produce an "n" bit output to be used in step 212. The pseudorandom function "f" may be one of the pseudorandom functions discussed with regard to FIGS. 1 and 2, but preferably it is the SHA pseudorandom function that is a well-known standard and described in the attached Appendix entitled "SECURE HASH STANDARD". In step 212 the output from step 210 is summed modular "n", with data string "R" to produce an "n" bit output. In step 214, the "n" bit output from step 212 is stored as "n" bit string "T" and the "n" bit string from step 208 is stored again as "n" bits block "S". In step 216, the same pseudorandom function that was used in step 210 is used again with the same key $K_2$ to operate on data string "T" to produce an "n" bit string. In step 218, the "n" bit output from step 216 is summed modular "n", with "n" bit string "S". In step 220 the "n" bit output from step 218 is stored as "n" bit string "V" and "n" bit string "T" is once again stored as string "T". In step 222, the same square hashing function that was used in step 204 is used with key $K_3$ to operate on data string "V" to produce an "n" bit output. In step 224, the output of step 222 is summed modular "n", with "n" bit string "T". In step 226 the output of step 224 is stored as "n" bit string "W" and "n" bit string "V" is once again stored as "n" bit string "V". In step 228 the data strings "V" and "W" are used as a "2n" bit output that is an encrypted representation of the input block or string.

FIG. 4 illustrates the decryption or decipher method associated with the encryption or cipher method illustrated in FIG. 3. In step 240 the "2n" bit input to be decrypted is inputted. In step 242 the "2n" bits input is broken into strings or blocks "V" and "W", each consisting of "n" bits. In step 244, the "n" bit string "V" is used as an operand of the square hashing function described by Equation (2) with key $K_3$. Step 244 produces an "n" bit output used by step 246 which subtracts the output of step 244 from string "W" using a modular "n" operation. In step 248, the output of step 246 is stored as "n" bit string "T" and the "n" bit string "V" is once again stored as string "V". In step 250, the same pseudorandom function that was used in the encryption process is used with key $K_2$ to operated on string "T" to produce an "n" bit output. In step 252, the output from step 250 is subtracted from data string "V" using a modular "n" operation to produce an "n" bit output. In step 254 the output of step 252 is stored in "n" bit strings "S" and "n" bit string "T" is once again stored as string "T". In step 256 the same pseudorandom function with the same key as step 250 operates on string "S" to produce an "n" bit output. In step 258 the output of step 256 is subtracted from string "T" using a modular "n" operation to produce an "n" bit string. In step 260 the "n" bit string from step 258 is stored as "n" bit string "R" and "n" bit string "S" is once again stored as string "S". In step 262 the square hashing function described by Equation (2) is used with key $K_1$ to operate on data string "R" to produce an "n"-bit output. In step 264 the "n" bit output from step 262 is subtracted from data string "S" using a modular "n" operation. In step 266 the "n" bit output from step 264 is stored as "n" bit string "L" and "n" bits string "R" is once again stored as string "R". In step 268 "n" bit string "L" and "R" are outputted as a "2n" bit block corresponding to the decrypted form of the inputted block or string. It should be noted that it is also possible to replace the hash functions of steps 204 and 222 of Fig. 3 , and steps 244 and 262 of Fig. 4 with other hash functions. It should be noted that the hash functions used in steps 204 and 262 should be the same, and hash functions used in steps 222 and 244 should be the same. It is also possible to use different keys or pseudorandom functions for the pseudorandom functions of steps 210 and 216 of Fig 3, and different keys or pseudorandom functions for the pseudorandom functions of steps 250 and 256 of Fig. 4. It should be noted that the keys and pseudorandom functions used in steps 216 and 250 should be the same, and the keys and pseudorandom functions used in steps 210 and 256 should be the same.

In one embodiment of the present invention, the number of bits "n" is equal to 160. As a result, the keys $K_1$ and $K_3$ used by the square hashing function are each 160 bits long. Additionally, the pseudorandom SHA function uses 2 keys. The first key is 160 bits long and the second key is 352 bits long. The SHA function is a cryptographic hash function that reduces 512 bits to 160 bits. The operand of the SHA function, as illustrated in Equation (3), is the concatenation of key $K_2$ and data block "B", where the data block "B" is the "n" bit block or string that was used as an operand of the pseudorandom functions discussed in FIGS. 3 and 4.

$$f_{K_2} = SHA(K_4, ((K_2, B)) \qquad (3)$$

The key $K_4$ is 160 bits long and is a secret value shared by the user encrypting the data and the user that will decrypt the data.

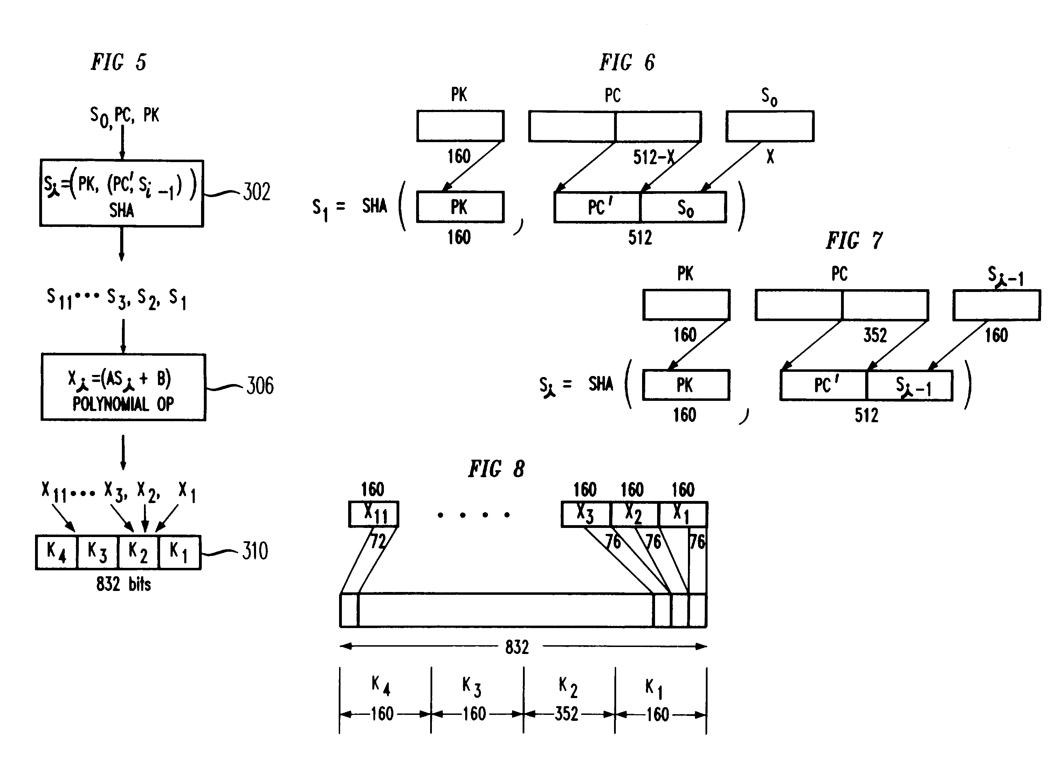

The keys are generated using an initial pseudorandom number known to both the user encrypting the data and the user decrypting the data. FIGS. 5-8 illustrate the process used to develop keys $K_1$ through $K_4$ using the initial seed $S_0$. FIG. 5 illustrates an overview of the process for developing the keys. Seed $S_0$, public constant PC and public key PK are fed to pseudorandom function SHA (secure hash function).

$$S_i = SHA \ (PK, (PC', S_{i-1})) \ for \ i\text{=}1\text{-}11 \qquad (4)$$

In step 302 the SHA function which is illustrated by Equation (4) is performed in an interactive fashion to produce the values $S_1$ through $S_{11}$. Each of the values $S_1$ through $S_{11}$ are 160 bits long. In step 304, the values $S_1$ through $S_{11}$ are fed to polynomial calculation 306.

$$X_i = (AS_i + B)\text{mod}_Q \ for \ i = 1\text{-}11 \qquad (5)$$

Where Q is an irreducable polynomial of degree 160.

In step 306, Equation (5) is executed to produce the values $X_1$ through $X_{11}$ where each value contains 160 bits. Equation (5) illustrates a polynomial multiplication followed by a polynomial addition where the operand $S_i$ correspond to the outputs $S_i$ from Equation (4). The polynomials "A" and "B" are any two random binary polynomials in one variable of 160 bits. Equation (5) is executed for each value of $S_i$ to produce values $X_1$ through $X_{11}$. Each value $X_i$ is 320 initially bits long and is reduced to 160 bits using a binary irreducible polynomial. Polynomial arithmetic and irreducible polynomials are well known in the art and are discussed in references such as "Mathematics for Computer Algebra" by Maurice Mignotte, 1991, Springer-Verlag, New York. In step 310, the 76 least significant bits (LSBs) of strings $X_1$ through $X_{10}$ and the 72 LSBs of $X_{11}$ are used to create a collection of 832 bits. The 832 bits developed in step 310 correspond to keys $K_1$ through $K_4$.

FIGS. 6 and 7 illustrates the way in which the operand of the SHA function are developed. It should be recalled that the SHA function uses a 160 bit key and a 512 bit operand to produce a 160 bit output. The SHA function uses the 160 bit key to hash or reduce the 512 bit operand to a 160 bit output. FIG. 6 shows that string $S_1$ is produced by using the 160 bit public key PK as the key for the SHA function and by using a concatenation of the seed $S_0$ and a portion of public constant PC as the operand of the SHA function. Typically, seed $S_0$ may contain anywhere from 40 to 512 bits, and the operand of the SHA function requires 512 bits. As a result, the LSBs of public constant PC are used to provide the necessary bits to produce a 512 bit operand for the SHA function when $S_0$ is less than 512 bits. For example, if seed $S_0$ has "x" bits, the 512-"x" least significant bits of public constant PC are concatenated with the bits of $S_0$. The bits of $S_0$ are used as the least significant bits of the 512 bit operand for the SHA function. The operation illustrated in FIG. 6 produces the string $S_1$ which has 160 bits. FIG. 7 illustrates the process for developing the remaining $S_i$ where "i" = 2 through 11. Once again, the SHA function requires a 160 bit key and a 512 bit string that will be reduced. The public key PK is used as the 160 bit key for the SHA function of FIG. 7 and the 512 bit string to be reduced is a concatenation of the prior 160 bit string $S_{i-1}$ and the 352 LSBs of public constant PC. It should be noted that since $S_{i-1}$ provides 160 bits, 352 least significant bits are required from public constant PC to produce a total of 512 bits for the SHA function. The 160 bits corresponding to $S_{i-1}$ are used as the LSBs of the string to be hashed and the 352 LSBs from public constant PC are used as the most significant bits of the string to be hashed.

Recalling FIG. 5, after strings $S_1$ through $S_{11}$ are produced they are each used as an operand to the polynomial operation defined by Equation (5) to produce strings $X_1$ through $X_{11}$ where each string is 160 bits long. FIG. 8 illustrates how the collection of strings $X_1$ through $X_{11}$ are used to produce an 832 bit string that corresponds to keys $K_1$ through $K_4$. The least significant 76 bits of strings $X_1$ through $X_{10}$ and least significant 72 bits of string $X_{11}$ are concatenated to produce the 832 bits that are used to produce keys $K_1$ through $K_4$. The least significant bits of the 832 bit string are the least significant 76 bits of string $X_1$ which are then followed by the least significant 76 bits of string $X_2$ and so on until the 832 bit string is completed by using the least significant 72 bits of string $X_{11}$. The resulting 832 bit string is then broken into keys $K_1$ through $K_4$ where the least significant 160 bits correspond to key $K_1$, the next 352 bits correspond to key $K_2$, the following 160 bits correspond to key $K_3$ and the final 160 bits correspond to key $K_4$.

## Claims

1. A method of encrypting a first n bit string and a second n bit string, comprising the steps of:

    performing a square hash of the first n bit string using a first key to produce a first hash result;
    modulo n summing the first hash result and the second n bit string to produce a first sum;
    using the first sum as an operand of a pseudo random function with a second key to produce a first pseudo random result;
    modulo n summing the first pseudo random result and the first n bit string to produce a second sum;
    using the second sum as an operand of the pseudo random function with the second key to produce a second pseudo random result;
    modulo n summing the second pseudo random result and the first sum to produce a third sum;
    performing the square hash of the third sum using a fourth key to produce a second hash result;
    modulo n summing the second sum and the second hash result to produce a fourth sum; and
    using the fourth sum and third sum as encrypted representations of the first n bit string and the second n bit string.

2. The method of claim 1, wherein the second and third keys are equal.

3. The method of claim 1, wherein the pseudo random function is a SHA pseudo random function.

4. The method of claim 3, wherein the second and third keys are equal.

5. A method of encrypting a first n bit string and a second n bit string, comprising the steps of:

    using a first hash function to perform a hash of the first n bit string using a first key to produce a first hash result;
    modulo n summing the first hash result and the second n bit string to produce a first sum;
    using the first sum as an operand of a pseudo random function with a second key to produce a first pseudo random result;
    modulo n summing the first pseudo random result and the first n bit string to produce a second sum;
    using the second sum as an operand of the pseudo random function with a third key to produce a second pseudo random result;
    modulo n summing the second pseudo random result and the first sum to produce a third sum;
    using a second hash function to perform a hash of the third sum using a fourth key to produce a second hash result;
    modulo n summing the second sum and the second hash result to produce a fourth sum; and
    using the fourth sum and third sum as encrypted representations of the first n bit string and the second n bit string.

6. The method of claim 5, wherein the first and second hash functions are the same.

7. The method of claim 5, wherein the pseudo random function is a SHA pseudo random function.

8. A method of encrypting a first n bit string and a second n bit string, comprising the steps of:

    performing a square hash of the first n bit string using a first key to produce a first hash result;
    modulo n summing the first hash result and the second n bit string to produce a first sum;
    using the first sum as an operand of a first pseudo random function with a second key to produce a first pseudo random result;
    modulo n summing the first pseudo random result and the first n bit string to produce a second sum;
    using the second sum as an operand of a second pseudo random function with a third key to produce a second pseudo random result;
    modulo n summing the second pseudo random result and the first sum to produce a third sum;
    performing the square hash of the third sum using a fourth key to produce a second hash result;
    modulo n summing the second sum and the second hash result to produce a fourth sum; and
    using the fourth sum and third sum as encrypted representations of the first n bit string and the second n bit string.

*FIG. 1*

*PRIOR ART*

*FIG. 2*

*PRIOR ART*

FIG. 3

FIG. 4

$V$     $W$

INPUT — 240

| $V$ | $W$ | — 242

| $W$ | $V$ | — 

SQH$_{K3}$ — 244

W–SQH$_{K3}$ mod n — 246

| $V$ | $T$ | — 248

$f_{K2}$ — 250

$V$–$f_{K2}(T)$ mod n — 252

| $T$ | $S$ | — 254

$f_{K2}$ — 256

$T$–$f_{K2}(S)$ mod n — 258

| $S$ | $R$ | — 260

SQH$_{K1}$ — 262

S–SQH$_{K1}$ mod n — 264

| $R$ | $L$ | — 266

| $L$ | $R$ |

OUTPUT — 268

$L$     $R$

FIG 5

$S_0, PC, PK$

$S_i = (PK, (PC', S_{i-1}))$
SHA — 302

$S_{11} \cdots S_3, S_2, S_1$

$X_i = (AS_i + B)$
POLYNOMIAL OP — 306

$X_{11} \cdots X_3, X_2, X_1$

| $K_4$ | $K_3$ | $K_2$ | $K_1$ |
832 bits — 310

FIG 6

PK

$S_0 = $ SHA ( PK, PC, $S_0$ )

160 · 512-X · X

$S_1 = $ SHA ( PK, PC', $S_0$ )
160 · 512

FIG 7

PK

PC · $S_{i-1}$
160 · 352 · 160

$S_i = $ SHA ( PK, PC', $S_{i-1}$ )
160 · 512

FIG 8

| $X_1$ | $X_2$ | $X_3$ | $\cdots$ | $X_{11}$ |
160 · 160 · 160 · 160
76 · 76 · 76 · 72

832
$K_1$ 160 · $K_2$ 352 · $K_3$ 160 · $K_4$ 160

10